# EUROPEAN PATENT APPLICATION

(11) **EP 1 906 679 A2**
(43) Date of publication of application: **02.04.2008**
(21) Application number: 07018808.1
(22) Date of filing: 25.09.2007
(51) Int. Cl.: H04N 13/00

(54) **Display device, image processing method, and electronic apparatus**

(30) Priority: 29.09.2006 JP 2006268985; 11.01.2007 JP 2007003236
(71) Applicant: Seiko Epson Corporation, Tokyo 160-0811 (JP)
(72) Inventor: Hamagishi, Goro, Nagano-ken 392-8502 (JP); Sugiyama, Nobuo, Nagano-ken 392-8502 (JP)
(74) Representative: HOFFMANN EITLE

(57) **Abstract**

A display device is provided. The display device includes pixels including a plurality of subpixels of different colors; a display unit in which the pixels are arranged in horizontal and vertical directions; an image data combining circuit that combines image data for a plurality of images to be displayed on the display unit with each other; and an image separation member that spatially separates the plurality of images displayed on the display unit from each other, in which the plurality of images are displayed over a plurality of rows on a row-by-row basis, and the plurality of images are alternately displayed in the horizontal and vertical directions on a subpixel-by-subpixel basis.

## Description

### BACKGROUND

### 1. Technical Field

The present invention relates to a display device, an image processing method, and an electronic apparatus, in which a stereoscopic image or a multi-viewpoint image can be observed without using special glasses.

### 2. Related Art

As a method for displaying a stereoscopic image without requiring special glasses, a parallax barrier method and a lenticular method are known. According to the methods, an image for the left eye (left-eye image) and an image for the right eye (right-eye image) using the parallax effect between the left and right eyes are alternately displayed on a screen in a vertical stripes. The displayed images are separated using a parallax barrier or a lenticular lens and are then guided to the left and right eyes of an observer, thereby displaying a stereoscopic image (such a method will be referred to as a "stripe barrier method").

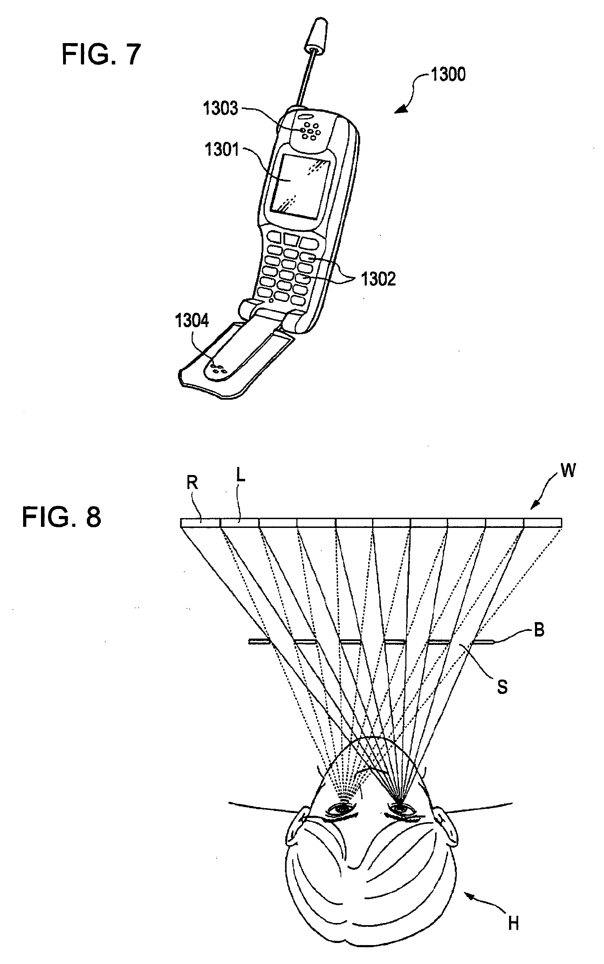

Fig. 8 shows a schematic construction of a display device using the parallax barrier. On the screen W, the left-eye image L and the right-eye image R are alternately displayed on a column-by-column basis. Between the screen W and the observer H, a parallax barrier B is disposed which is one example of an image separation member for spatially separating the left-eye image L and the right-eye image R from each other. The parallax barrier B is a light blocking film having a plurality of apertures corresponding to the left-eye image L and the right-eye image R. The parallax barrier B has a function of preventing the left-eye image L from entering the right eye of the observer H and preventing the right-eye image R from entering the left eye of the observer H. The parallax barrier B is provided with slits S arranged as vertical stripes. With the slits S, the left-eye image L can be guided to the left eye of the observer H, and the right-eye image R can be guided to the right eye of the observer H.

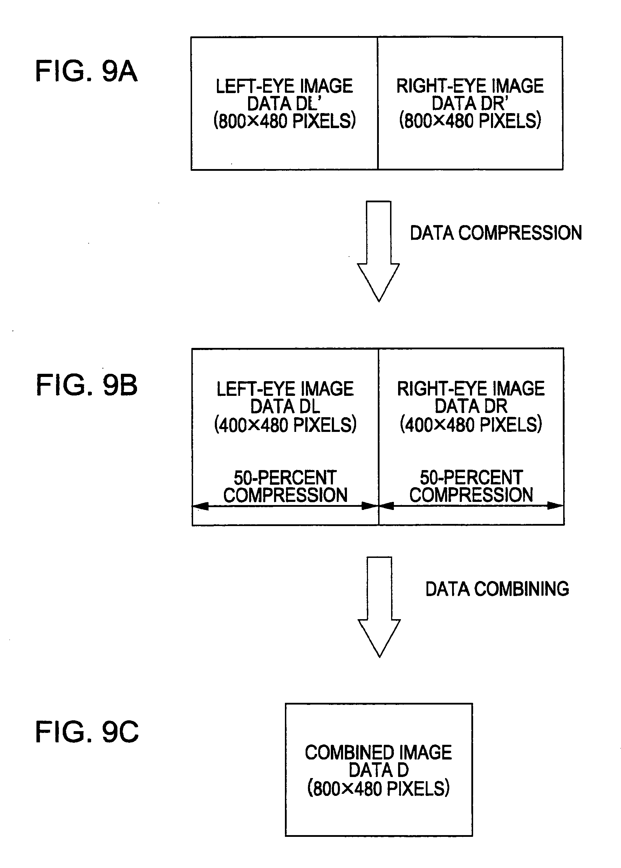

Figs. 9A to 9C are explanatory diagrams showing a method for combining the left-eye image L and the right-eye image R on one screen W. In the drawing, Fig. 9A shows image data DL' for the left eye (left-eye image data) and image data DR' for the right eye (right-eye image data) that are supplied to the display device; Fig. 9B shows left-eye image data DL and right-eye image data DR obtained by compressing the left- and right-eye image data DL' and DR' in the horizontal direction; and Fig. 9C shows combined image data D obtained by alternately rearranging the image data DR and DL on an column-by-column basis and combining the rearranged image data with each other.

As shown in Figs. 9A to 9C, since two images L and R, one for the left eye and one for the right eye, are displayed on the screen W, the horizontal resolution of each of the images L and R is 1/2 of the original one. The left-eye image data DL' and the right-eye image data DR' supplied to the display device are filtered out by an image data combining circuit on a pixel-by-pixel basis and are processed to the left-eye image data DL and the right-eye image data DR in which the horizontal resolution is reduced by 50 percent. The image data DL and DR are alternately rearranged on a subpixel-by-subpixel basis and combined with each other, thereby producing the combined data D (see JP-A-2000-244946).

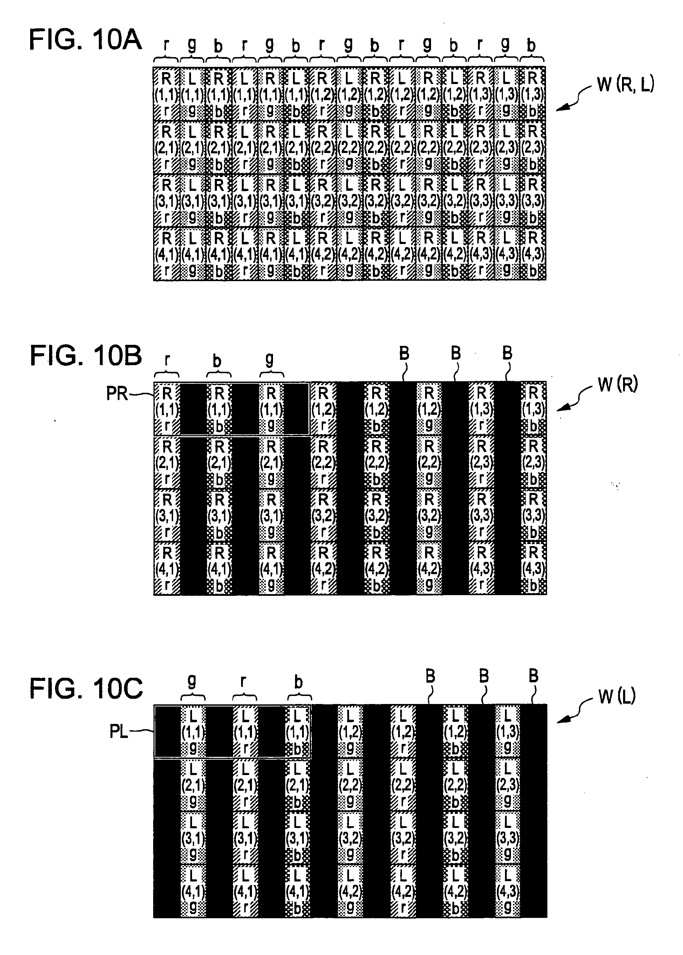

Figs. 10A to 10C show plan views of a part of an image of the combined data D displayed on the screen W. In the drawing, Fig. 10A shows a combined image of the left-eye image L and the right-eye image R; Fig. 10B shows the right-eye image R as observed through the parallax barrier B; and Fig. 10C shows the left-eye image L as observed through the parallax barrier B. In the drawing, the characters "r," "g" and "b" respectively represent subpixels associated with color filters of red, green, and blue.

As shown in Fig. 10A, the subpixels for displaying the right-eye image R and the subpixels for displaying the left-eye image L are alternately arranged in the horizontal direction on a subpixel-by-subpixel basis. As viewed from the vertical direction, a plurality of subpixels for displaying the right-eye image R and a plurality of subpixels for displaying the left-eye image L are alternately arranged on a column-by-column basis. That is, the plurality of subpixels for displaying images R and L are arranged in the arrangement direction of the color filters (in the vertical direction) in stripes. The right-eye image R and the left-eye image L shown in Fig. 8 each represents an image formed by the subpixels, corresponding to one column, arranged in the vertical direction.

In Fig. 10B, a set of three subpixels represented by the same coordinates (n, k) constitutes one display pixel PR for the right-eye image R. That is, the display pixel PR is composed of three (red, blue, and green) subpixels arranged on a subpixel-by-subpixel basis. The display pixel PR is a minimum display unit for displaying a post-combined right-eye image R, and is different from the pixel (panel pixel) constituting the screen W. That is, the display pixel PR is different from the pixel composed of a set of three (red, green, and blue) subpixels that are arranged adjacently in the horizontal direction. On the screen W, a plurality of display pixels PR for the right eye (right-eye display pixel) are arranged in the horizontal and vertical directions. The plurality of right-eye display pixels PR form the whole right-eye image R.

In Fig. 10C, a set of three subpixels represented by the same coordinates (n, k) constitutes one display pixel PR for the left-eye image L. That is, the display pixel PL is composed of three subpixels of red, blue, and green arranged on a subpixel-by-subpixel basis. The display pixel PL is a minimum display unit for displaying a post-combined left-eye image L, and is different from the pixel (panel pixel) constituting the screen W. That is, the display pixel PL is different from a set of three (red, green, and blue) subpixels that are arranged adjacently in the horizontal direction. On the screen W, a plurality of display pixels PL for the left eye (left-eye display pixel) are arranged in the horizontal and vertical directions. The plurality of left-eye display pixels PL form the whole left-eye image L.

However, since the display pixels PR and PL are composed of three subpixels alternately arranged on a subpixel-by-subpixel basis, the size of the display pixels PR and PL is doubled in the horizontal direction compared with that required for displaying a two-dimensional image (that is, the number of display pixels used is doubled). Thus, it is difficult to obtain sufficient reproducibility at the time of displaying a fine image. In particular, when images are blocked on a subpixel-by-subpixel basis using a stripe barrier method, a resulting image may become unclear and may be perceived as a coarse image since the human eyes are more sensitive to the horizontal resolution than the vertical resolution.

### SUMMARY

An advantage of some aspects of the invention is that it provides a display device and an image processing method, capable of displaying a stereoscopic image or a multi-viewpoint image having a high resolution. Another advantage of some aspects of the invention is that it provides an electronic apparatus having such a display device, capable of displaying a stereoscopic image or a multi-viewpoint image having a clear and smooth border.

According to an aspect of the invention, there is provided a display device which includes pixels including a plurality of subpixels of different colors; a display unit in which the pixels are arranged in horizontal and vertical directions; an image data combining circuit that combines image data for a plurality of images to be displayed on the display unit with each other; and an image separation member that spatially separates the plurality of images displayed on the display unit from each other, in which the plurality of images are displayed over a plurality of rows on a row-by-row basis, and the plurality of images are alternately displayed in the horizontal and vertical directions on a subpixel-by-subpixel basis. According to such a configuration, since the horizontal resolution is not reduced, it is possible to display a clear image.

In the above aspect, it is desirable that an aspect ratio of a display pixel which is a minimum display unit of the images displayed over the plurality of rows be 1:1. According to such a configuration, it is possible to prevent a resulting image from being deformed in the vertical direction. The aspect ratio may not be exactly 1:1. In some cases, the aspect ratio cannot be exactly 1:1 due to a pixel design that inevitably involves uneven manufacturing processes. Therefore, the aspect ratio in the range of 1:1 to 2:1, although not exactly 1:1, should be construed as having substantially the same meaning as the aspect ratio of 1:1 and thus should also be included in the technical scope of the invention as long as the aspect ratio provides the same advantages as those of the invention.

In the above aspect, it is desirable that the image data combining circuit be configured to separate the image data for the plurality of images into image data corresponding to a plurality of rows arranged in the vertical direction on one screen and to filter out the image data corresponding to the plurality of rows on a row-by-row basis, thereby compressing the image data for the plurality of images. According to such a configuration, the pre-combined image data supplied from an external source can be used as image data of a normal resolution. That is, when the image data are output to the display unit without being filtered out on a row-by-row basis, it is necessary to additionally input, as the pre-combined image data, special image data having a resolution that is reduced by 50 percent in the vertical direction. According to the invention, since the resolution of the image data is reduced by 50 percent in the vertical direction after being supplied thereto, it is not necessary to additionally input the special image data as the pre-combined image data. Thus, it is not necessary to modify existing input means or input conversion circuits.

In the above aspect, it is desirable that the image data combining circuit include a read-in control circuit that selectively reads, into a memory, the image data corresponding to the plurality of rows to be displayed on the display unit from pre-combined image data for the plurality of images supplied from an external source; and a read-out control circuit that reads out the image data read into the memory on a row-by-row basis and outputs the image data for the plurality of images to the display unit on a row-by-row basis. According to such a configuration, since the image data for the plurality of images are supplied to the display unit after being combined with each other, it is not necessary to modify the structure of the display unit. Thus, a display unit suitable for displaying the two-dimensional image can be used as the display unit of the invention without modification.

In the above aspect, it is desirable that the plurality of images include an image for the left eye and an image for the right eye. In the above aspect, it is desirable that the plurality of images include a first-viewpoint image observed from a first viewpoint and a second-viewpoint image observed from a second viewpoint. According to such a configuration, it is possible to provide a display device capable of displaying a stereoscopic image or a multi-viewpoint image having a high resolution.

According to another aspect of the invention, there is provided an image processing method in which a plurality of images are combined with each other and displayed on one screen, the method including displaying the plurality of images over a plurality of rows on a row-by-row basis; and displaying the plurality of images in an alternating manner in horizontal and vertical direction on a subpixel-by-subpixel basis. According to such a method, since the horizontal resolution is not reduced, it is possible to display a clear image.

According to a further aspect of the invention, there is provided an electronic apparatus having the display device of the above aspect. According to such a configuration, it is possible to provide an electronic apparatus provides capable of displaying a stereoscopic image or a multi-viewpoint image having a clear and smooth border.

### BRIEF DESCRIPTION OF THE DRAWINGS

The invention will be described with reference to the accompanying drawings, wherein like numbers reference like elements.

Fig. 1 is a schematic diagram showing the construction of a display device in accordance with a first embodiment of the invention.

Fig. 2 is a block diagram showing the entire construction of the display device.

Fig. 3 is a block diagram showing the electrical construction of a display unit and a peripheral driving circuit of the display device.

Fig. 4 is a diagram for explaining an image processing method of the display device.

Figs. 5A to 5C are plan views of an example of a combined image that is combined using the image processing method.

Figs. 6A to 6C are plan views of another example of the combined image that is combined using the image processing method.

Fig. 7 is a schematic diagram showing the construction of a cellular phone as an example of an electronic apparatus.

Fig. 8 is a schematic diagram showing the construction of a known display device.

Figs. 9A to 9C are diagrams for explaining an image processing method of the display device.

Figs. 10A to 10C are plan views of a combined image combined using the image processing method.

### DESCRIPTION OF EXEMPLARY EMBODIMENTS

Hereinafter, embodiments of the invention will be described with reference to the accompanying drawings. In the following descriptions, a column direction in a screen (the arrangement direction of data lines) will be referred to as "vertical direction," and a row direction in the screen (the arrangement direction of scanning lines) will be referred to as "horizontal direction". The same components as those of the known display device shown in Figs. 8 to 10 will be referenced by the same reference numerals, and the detailed descriptions thereof will be omitted.

### First Embodiment

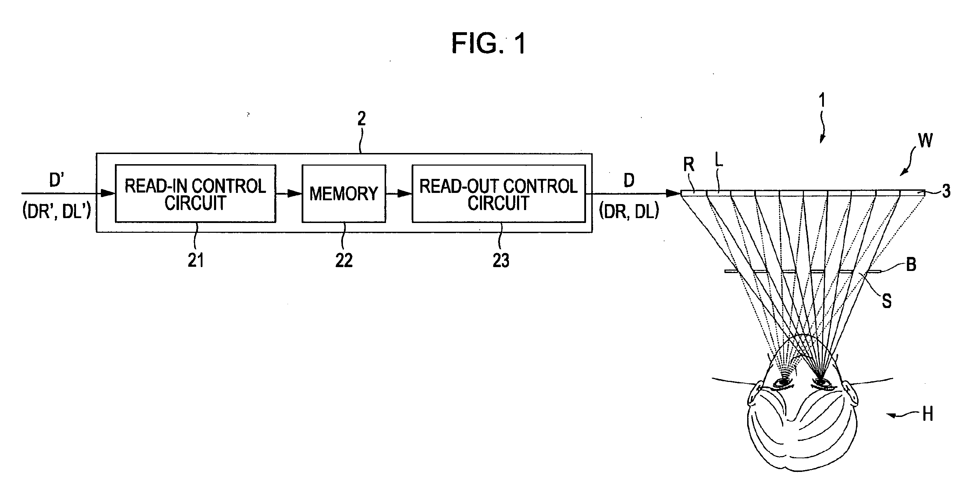

Fig. 1 is a schematic diagram showing the construction of a display device 1 of a first embodiment of the invention. The display device 1 includes an image data combining circuit 2 that combines multiple image data D' including a plurality of image data DR' and DL' into image data D corresponding to one screen; a display panel that displays the image data D supplied from the image data combining circuit 2 on the screen W; and a parallax barrier (image separation member) B that spatially separates the plurality of images R and L displayed on the screen W so as to be guided to the right eye and the left eye of the observer H, respectively.

The multiple image data D' includes the right-eye image data DR' and the left-eye image data DL'. The right-eye image data DR' and the left-eye image data DL' each includes image data corresponding to one screen. The right-eye image data DR' is allocated to the upper half portion of a data area of a predetermined period, and the left-eye image data DL' is allocated to the lower half portion of the data area of the predetermined period. In this way, the multiple image data D' is produced including the image data corresponding to a plurality of screens.

The image data combining circuit 2 includes the read-in control circuit 21 that compresses the multiple image data D' supplied thereto and sequentially stores the compressed image data in the memory 22; and the read-out control circuit 23 that reads out the image data stored in the memory 22 in accordance with a predetermined rule and outputs the image data as the image data D corresponding to one screen. The image data combining circuit 2 filters out portions of the right-eye image data DR' and the left-eye image data DL' included in the multiple image data D' using the read-in control circuit 21, and alternately rearranges the image data DR' and DL' using the memory 22, thereby combining new image data D.

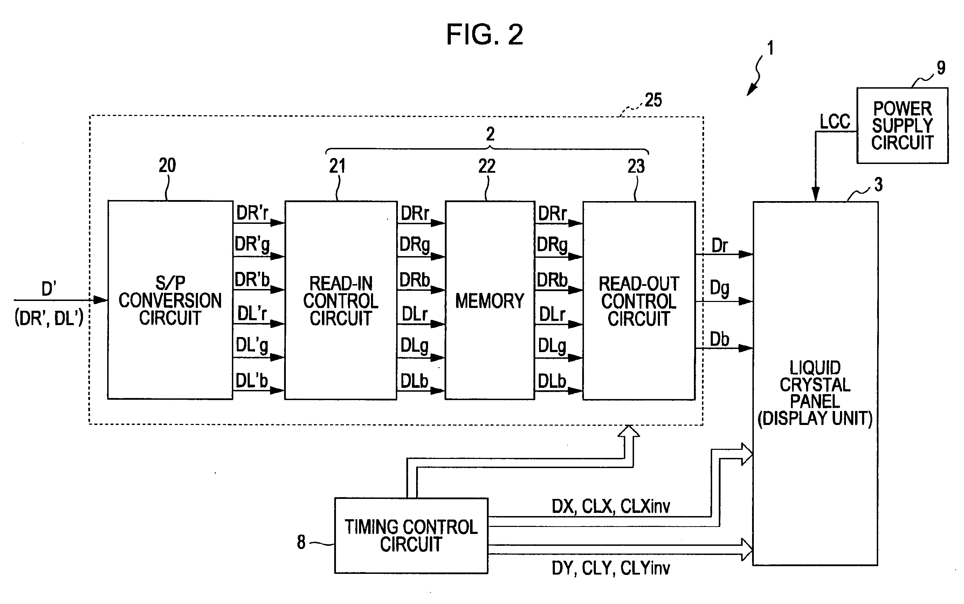

Fig. 2 is a block diagram showing the entire construction of the display device 1. The display device 1 includes a liquid crystal panel 3 serving as the display unit, an image data supply circuit 25, a timing control circuit 8, and a power supply circuit 9.

The timing control circuit 8 is provided with a timing signal generating unit (not shown) that generates dot clocks for scanning pixels (panel pixels) of the liquid crystal panel 3. The timing control circuit 8 generates, based on the dot clocks generated by the timing signal generating unit, a Y clock signal CLY, an inverted Y clock signal CLYinv, an X clock signal CLX, an inverted X clock signal CLXinv, a Y start pulse DY, and an X start pulse DX, and supplies the generated signals and pulses to the image data supply circuit 25 and the liquid crystal panel 3.

The image data supply circuit 25 includes an S/P conversion circuit 20, the read-in control circuit 21, the memory 22, and the read-out control circuit 23. The S/P conversion circuit 20 divides a chain of multiple image data D' serially supplied from an external source into image data components DR'r, DR'g and DR'b for the right-eye image and image data components DL'r, DL'g and DL'b, and outputs the image data components as six-phase-developed image data. The read-in control circuit 21 filters out portions of six image data components DR'r, DR'g, DR'b, DL'r, DL'g and DL'b that were phase-developed by the S/P conversion circuit 20 to produce six new image data components DRr, DRg, DRb, DLr, DLg and DLb, and supplies the new image data components to the memory 22. The read-out control circuit 23 rearranges the image data components DRr, DRg, DRb, DLr, DLg and DLb stored in the memory 22, and outputs image data components Dr, Dg, and Db for the combined image. Image data components designated by "r," "g" and "b" are image data components of red, green, and blue, respectively. The image data components Dr, Dg, and Db respectively are image data components of red, green, and blue for the combined image of the right-eye image and the left-eye image.

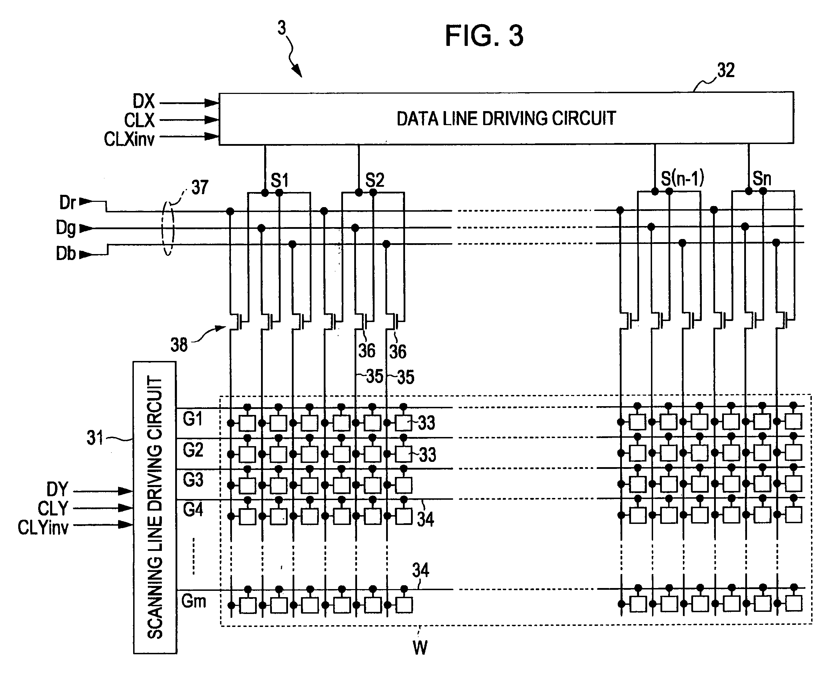

Fig. 3 is a block diagram showing the electrical construction of the liquid crystal panel 3 and a peripheral driving circuit of the display device 1. The liquid crystal panel 3 is provided with an image display area (screen) W for displaying the image data components Dr, Dg, and Db. In the image display area W, a plurality of pixel electrodes 33 are aligned in a matrix arrangement in the horizontal and vertical directions. In the borders of the pixel electrodes 33, a plurality of scanning lines 34 are arranged in the horizontal direction of the image display area W; and a plurality of data lines 35 are arranged in the vertical directions of the image display area W. In addition, TFTs (not shown) serving as pixel switching elements are arranged in the vicinity of intersections of the scanning lines 34 and the data lines 35. The pixel electrodes 33 are electrically connected to the scanning lines 33 and the data lines 35 via the TFTs.

Each formation area of the pixel electrodes 33 constitutes a subpixel. Each subpixel corresponds to any one of color elements red, green, and blue. The whole image display area W is formed by the subpixels arranged in the horizontal and vertical directions. Although not shown in the drawings, a plurality of color filters are arranged as stripes on the image display area W. Each color filter has any one of red, green, and blue colors, and corresponds to any one column of subpixels arranged in the vertical direction. The color filters of red, green, and blue are alternately arranged on a subpixel-by-subpixel basis. One pixel (panel pixel) is constituted by three subpixels corresponding to three color filters of red, green, and blue.

In the peripheral portion of the image display area W, a peripheral driving circuit is provided including a scanning line driving circuit 31, a data line driving circuit 32, and a sampling circuit 38. These circuits may be integrally formed on the substrate of the pixel electrodes 33 and may be separately provided as driving ICs.

Between the data line driving circuit 32 and the sampling circuit 38, three image signal lines 37 are provided for supplying the image data components Dr, Dg, and Db. Each of the three image signal lines 37 corresponds to any one of the three-phase-developed, red-, green- and blue-image data components Dr, Dg, and Db.

One end of each data line 35 is electrically connected to a corresponding one of sampling switch 36. Each sampling switch 36 is electrically connected to any one of three image signal lines 37 for supplying three-phase image data components Dr, Dg, and Db. The sampling switches 36 are arranged in the horizontal direction and constitute the sampling circuit 38.

The scanning line driving circuit 31 receives the Y clock signal CLY, the inverted Y clock signal CLYinv and the Y start pulse DY from the timing control circuit 8 shown in Fig. 2. Upon receiving the Y start pulse DY, the scanning line driving circuit 31 sequentially generates and outputs scanning signals G1, G2, ..., Gm in synchronization with the Y clock signal CLY and the inverted Y clock signal CLYinv.

The data line driving circuit 32 receives the X clock signal CLX, the inverted X clock signal CLXinv and the X start pulse DX from the timing control circuit 8 shown in Fig. 2. Upon receiving the X start pulse DX, the data line driving circuit 32 sequentially generates and outputs sampling signals S1, S2, ..., Sn in synchronization with the X clock signal CLX and the inverted X clock signal CLXinv.

The sampling signals are supplied to each pixel (each panel pixel) as a set of three (red, green, and blue) subpixels that are arranged adjacently in the horizontal direction. The data line driving circuit 32 sequentially supplies the sampling signals S1, S2, ..., Sn to the sampling switches 36 on a pixel-by-pixel basis. The sampling switches 36 are sequentially turned ON in accordance with the sampling signals. The image data components Dr, Dg, and Db are sequentially supplied to the data lines 35 on a pixel-by-pixel basis via the turned ON sampling switches 36.

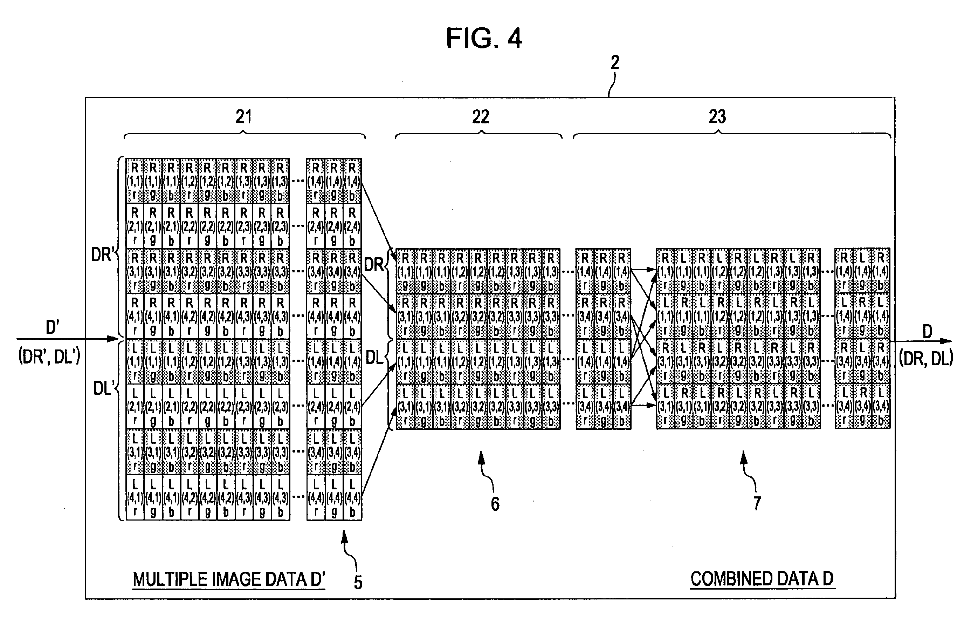

Next, an image processing method of the image data combining circuit 2 will be described with reference to Fig. 4. First, the read-in control circuit 21 reads in the multiple image data D'. The read-in control circuit 21 filters out portions of the right-eye image data DR' and the left-eye image data DL' included in the multiple image data D' and produces new right-eye image data DR and new left-eye image data DL, thereby sequentially supplying the new image data DR and DL to the memory 22.

The multiple image data D' includes the right-eye image data DR' corresponding to one screen as represented by R(1, 1), R(1, 2), and so on; and the left-eye image data DL' corresponding to one screen as represented by L(1, 1), L(1, 2), and so on. In Fig. 4, numeral 5 represents the arrangement of the multiple image data D' corresponding to one screen supplied from an external source; and numeral 6 represents the arrangement of the multiple image data D' in a storage area of the memory 22. Numeral 7 represents the arrangement of the image data (combined data) D corresponding to one screen obtained by selecting and rearranging a portion of the multiple image data D'. The combined data D includes the right-eye image data DR obtained by extracting a portion of the right-eye image data DR'; and the left-eye image data DL obtained by extracting a portion of the left-eye image data DL'. These image data DR and DL are rearranged on a subpixel-by-subpixel basis and are output as the image data components Dr, Dg, and Db of the subpixels of red, green, and blue (see Fig. 2).

In the arrangement diagrams 5 and 7, each rectangular area represents image data of a subpixel. The characters on the upper two lines in each rectangular area represent the type (right-eye or left-eye image) of the image data and the coordinates on the screen W of the pixel including the subpixel. For example, if the upper portion of the rectangular area of the image data is indicated by "R(n, k)" (wherein, n and k are integers), the image data is the right-eye image data of a pixel arranged at the n-th row and k-th column on the screen W. The character on the bottom line in each rectangular area represents the color information of the subpixel. The characters "r," "g," and "b" represent color information of red, green, and blue, respectively. For example, if the bottom line in the rectangular area of the image data is indicated by "m" (wherein, m is r, g or b), the image data is the image data of a subpixel corresponding to a color filter of m color. Hereinafter, the image data of the subpixel will be simply denoted as "R(n, k)m" (wherein, n and k are integers; and m is r, g or b) .

First, in the read-in control circuit 21, for the right-eye image data DR', the image data of red, green, and blue, corresponding to one row and arranged at coordinates (1, 1), i.e., the image data R(1, 1)r, R(1, 1)g, R(1, 1)b, ..., R(1, 4)r, R(1, 4)g, and R(1, 4)b are stored in the memory 22. The image data of red, green, and blue, corresponding to one row and arranged at coordinates (2, 1), i.e., the image data R(2, 1)r, R(2, 1)g, R(2, 1)b, ..., R(2, 4)r, R(2, 4)g, and R(2, 4)b are filtered out and thus are not stored in the memory 22. The image data of red, green, and blue, corresponding to one row and arranged at coordinates (3, 1), i.e., the image data R(3, 1)r, R(3, 1)g, R(3, 1)b, ..., R(3, 4)r, R(3, 4)g, and R(3, 4)b are stored in the memory 22.

In this way, the image data corresponding to odd-numbered rows are stored in the memory 22, and the image data in even-numbered rows are filtered out without being stored in the memory 22. As a result, new right-eye image data DR having an information amount two times smaller than that of the right-eye image data DR' are stored in the memory 22. The new right-eye image data DR are obtained by selecting a portion of the original right-eye image data DR' corresponding to a predetermined row while filtering out the remaining portion of the original right-eye image data DR'. Thus, the information amount of the image data DR is reduced by 50 percent as a whole.

After completing the image processing operation for the right-eye image data DR', the image processing operation for the left-eye image data DL' is performed. In the read-in control circuit 21, for the left-eye image data DL', the image data of red, green, and blue, corresponding to one row and arranged at coordinates (1, 1), i.e., the image data L(1, 1)r, L(1, 1)g, L(1, 1)b, ..., L(1, 4)r, L(1, 4)g, and L(1, 4)b are stored in the memory 22. The image data of red, green, and blue, corresponding to one row and arranged at coordinates (2, 1), i.e., the image data L(2, 1)r, L(2, 1)g, L(2, 1)b, ..., L(2, 4)r, L(2, 4)g, and L(2, 4)b are filtered out and thus are not stored in the memory 22. The image data of red, green, and blue, corresponding to one row and arranged at coordinates (3, 1), i.e., the image data L(3, 1)r, L(3, 1)g, L(3, 1)b, ..., L(3, 4)r, L(3, 4)g, and L(3, 4)b are stored in the memory 22.

In this way, the image data corresponding to odd-numbered rows are stored in the memory 22, and the image data in even-numbered rows are filtered out without being stored in the memory 22. As a result, new left-eye image data DL having an information amount two times smaller than that of the left-eye image data DL' are stored in the memory 22. The new left-eye image data DL are obtained by selecting a portion of the original left-eye image data DL' corresponding to a predetermined row while filtering out the remaining portion of the original left-eye image data DL'. Thus, the information amount of the image data DL is reduced by 50 percent as a whole.

After the image processing operation, the read-out control circuit 23 reads out the right-eye image data DR and the left-eye image data DL from the memory 22 in accordance with a predetermined rule. The red, green, and blue subpixels included in the pixel at coordinates (1, 1) are supplied with the image data R(1, 1)r, L(1, 1)g, and R(1, 1)b, respectively. The red, green, and blue subpixels included in the pixel at coordinates (1, 2) are supplied with the image data L(1, 2)r, R(1, 2)g, and L(1, 2)b, respectively. The red, green, and blue subpixels included in the pixel at coordinates (1, 3) are supplied with the image data R(1, 3)r, L(1, 3)g, and R(1, 3)b, respectively. The red, green, and blue subpixels included in the pixel at coordinates (1, 4) are supplied with the image data L(1, 4)r, R(1, 4)g, and L(1, 4)b, respectively.

Similarly, the red, green, and blue subpixels included in the pixel at coordinates (2, 1) are supplied with the image data L(2, 1)r, R(2, 1)g, and L(2, 1)b, respectively. The red, green, and blue subpixels included in the pixel at coordinates (2, 2) are supplied with the image data R(2, 2)r, L(2, 2)g, and R(2, 2)b, respectively. The red, green, and blue subpixels included in the pixel at coordinates (2, 3) are supplied with the image data L(2, 3)r, R(2, 3)g, and L(2, 3)b, respectively. The red, green, and blue subpixels included in the pixel at coordinates (2, 4) are supplied with the image data R(2, 4)r, L(2, 4)g, and R(2, 4)b, respectively.

With such a configuration, the right-eye image data corresponding to the first and second rows, i.e., the image data R(1, 1)r, R(1, 1)g, R(1, 1)b, ..., R(2, 4)r, R(2, 4)g, and R(2, 4)b, and the left-eye image data corresponding to the first and second rows, i.e., the image data L(1, 1)r, L(1, 1)g, L(1, 1)b, ..., L(2, 4)r, L(2, 4)g, L(2, 4)b are alternately read out in the horizontal and vertical directions on a subpixel-by-subpixel basis. The right-eye image data corresponding to the first row and the left-eye image data corresponding to the first row are combined as image data corresponding to two rows (the first and second rows) on the screen W. The same statements can be similarly applied to the image data corresponding to the third and fourth rows.

In this way, the right-eye image data corresponding to the odd-numbered rows (the p-th rows) and the left-eye image data corresponding to the odd-numbered rows (the p-th rows) are alternately read out in the horizontal and vertical directions on a subpixel-by-subpixel basis. The right-eye image data corresponding to the p-th row and the left-eye image data corresponding to the p-th row are combined as image data corresponding to two rows (the p-th and (p+1)-th rows) on the screen W. As a result, new image data (combined data) D are produced by combining the right-eye image data DR and the left-eye image data DL with each other.

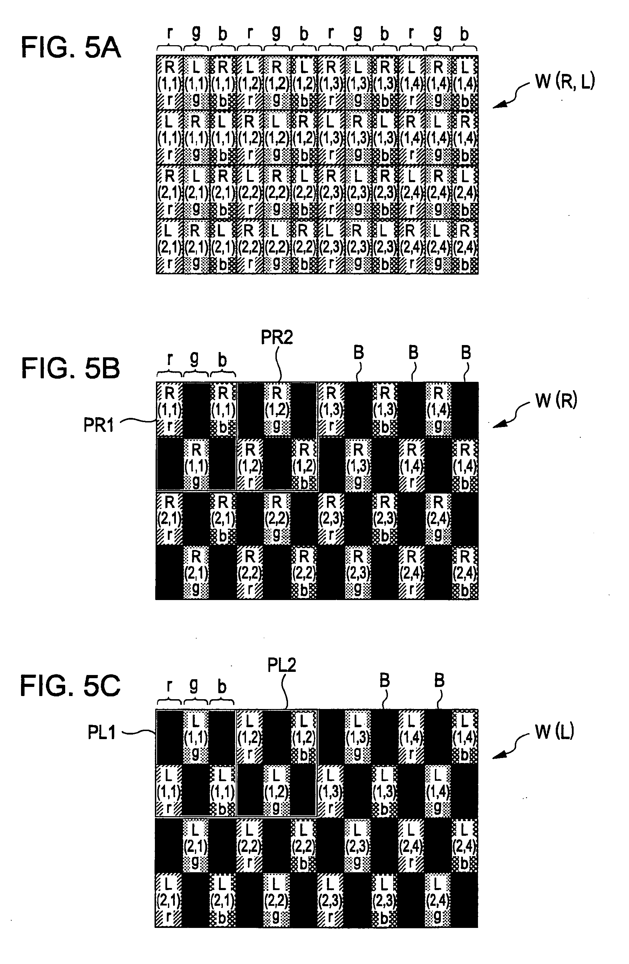

Figs. 5A and 5C show plan views of a part of an image of the combined data D displayed on the screen W. In the drawing, Fig. 5(A) shows a combined image of the left-eye image L and the right-eye image R; Fig. 5(B) shows the right-eye image R as observed through the parallax barrier B; and Fig. 5(C) shows the left-eye image L as observed through the parallax barrier B. In the drawing, the characters "r," "g" and "b" respectively represent subpixels associated with the color filters of red, green, and blue.

As shown in Fig. 5A, the subpixels for displaying the right-eye image R and the subpixels for displaying the left-eye image L are alternately displayed in the horizontal and vertical directions on a subpixel-by-subpixel basis. As viewed from the horizontal direction, the right-eye image R corresponding to one row and the left-eye image L corresponding to one row are displayed over two rows; and subpixels for displaying the right-eye image R and subpixels for displaying the left-eye image L are alternately arranged in zigzags.

In Fig. 5B, a set of three subpixels represented by the same coordinates (n, k) constitutes one display pixel PR1 or PR2 for the right-eye image R. That is, the display pixel PR1 represented by coordinates (1, 1) is composed of the red and blue subpixels in the first row of the screen W and the green subpixel in the second row of the screen W. The display pixel PR2 represented by coordinates (1, 2) is composed of the green subpixel in the first row of the screen W and the red and blue subpixels in the second row of the screen W. Each display pixel PR1 and PR2 is a minimum display unit for displaying a post-combined right-eye image R, and is different from the pixel (panel pixel) constituting the screen W. That is, each display pixel PR1 and PR2 is different from the pixel composed of a set of three (red, green, and blue) subpixels that are arranged adjacently in the horizontal direction. On the screen W, a plurality of display pixels PR1 and PR2 for the right eye (right-eye display pixel) are arranged in the horizontal and vertical directions. The plurality of right-eye display pixels PR1 and PR2 form the whole right-eye image R.

In Fig. 5C, a set of three subpixels represented by the same coordinates (n, k) constitutes one display pixel PL1 or PL2 for the left-eye image L. That is, the display pixel PL1 represented by coordinates (1, 1) is composed of the green subpixel in the first row of the screen W and the red and blue subpixels in the second row of the screen W. The display pixel PL2 represented by coordinates (1, 2) is composed of the red and blue subpixels in the first row of the screen W and the green subpixel in the second row of the screen W. Each display pixel PL1 and PL2 is a minimum display unit for displaying a post-combined left-eye image L, and is different from the pixel (panel pixel) constituting the screen W. That is, each display pixel PL1 and PL2 is different from the pixel composed of a set of three (red, green, and blue) subpixels that are arranged adjacently in the horizontal direction. On the screen W, a plurality of display pixels PL1 and PL2 for the left eye (left-eye display pixel) are arranged in the horizontal and vertical directions. The plurality of left-eye display pixels PL1 and PL2 form the whole left-eye image L.

The size in the horizontal direction of the individual display pixels PR1 and PR2 is equal to that of the pixels (panel pixels) required for displaying the two-dimensional image. Thus, the resolution is not reduced even at the time of displaying a fine image. Accordingly, the right-eye image R formed by the display pixels PR1 and PR2 becomes one having a high horizontal resolution and a smooth border.

The above statements can be similarly applied to the case of the left-eye image L shown in Fig. 5C. The size in the horizontal direction of the individual display pixels PL1 and PL2 is equal to that of the pixels (panel pixels) required for displaying the two-dimensional image. Thus, the resolution is not reduced even at the time of displaying a fine image. Accordingly, the left-eye image L formed by the display pixels PL1 and PL2 becomes one having a high horizontal resolution and a smooth border.

As described above, according to the display device 1 of the present embodiment, since the size in the horizontal direction of the display pixels PR1, PR2, PL1, and PL2 for displaying a combined image is equal to that of the pixels (panel pixels) required for displaying the two-dimensional image, it is possible to display a clear image having a high resolution. In this case, although a resulting image may become coarse in the vertical direction, such a coarse image can be negated by additionally inputting, as the multiple image data D', image data having a density that is doubled in the vertical direction.

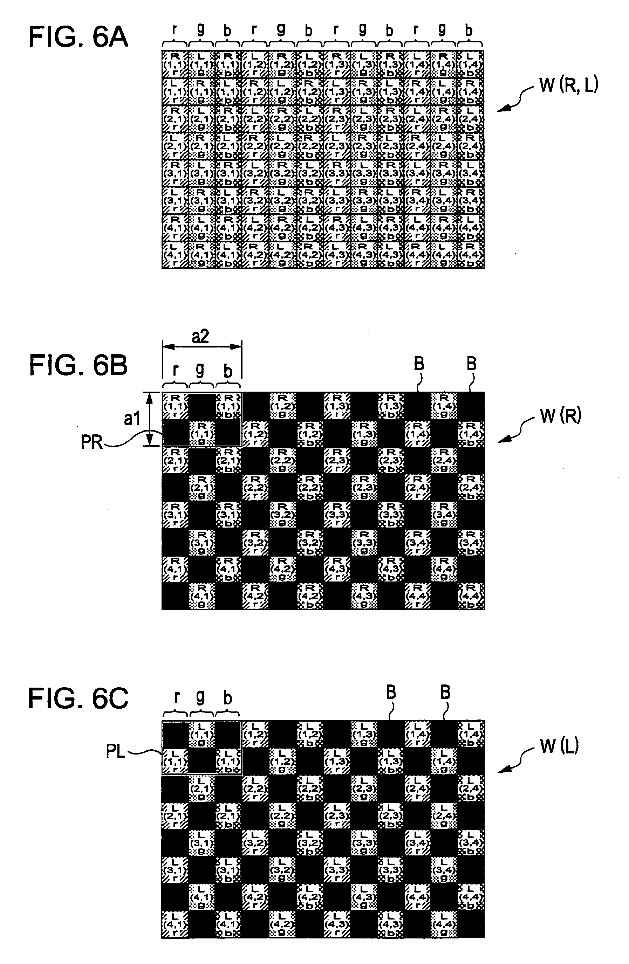

Figs. 6A to 6C show an example in which image data having a normal density in the vertical direction are supplied as the multiple image data D' and are displayed on the display panel 3 having a pixel density that is doubled in the vertical direction. The width of one subpixel in the vertical direction on the display panel 3 (screen W) is two times smaller than that shown in Figs. 5A to 5C. Since the aspect ratio of the whole screen is the same as that shown in Figs. 5A to 5C, the density of subpixels in the vertical direction on the display panel 3 shown in Figs. 6A to 6C is two times greater than that of the display panel shown in Figs. 5A to 5C. For this reason, the aspect ratio (a1:a2) in the horizontal and vertical directions of one display pixel PR and PL arranged over two rows becomes 1:1. Thus, a resulting image is not deformed in the vertical direction. According to the display device, since a high resolution can be realized in the horizontal and vertical direction, it is possible to display a clearer image.

In the present embodiment, a stereoscopic display device for displaying a stereoscopic image is described. However, the invention may be applied to a multi-viewpoint display device for presenting a multi-viewpoint image to a plurality of observers. In the case of the stereoscopic display device, the right-eye image data DR' and the left-eye image data DL' are prepared as the image data for display, and the right-eye image R and the left-eye image L are spatially separated using the image separating unit (parallax barrier, for example). In the case of the multi-viewpoint display device, multi-viewpoint image data are prepared as the image data for display, and images of different viewpoints are spatially separated using the image separating unit (parallax barrier, for example). For example, in the case of a display device for an on-vehicle navigation system, an image of a first viewpoint (driver's seat side) and an image of a second viewpoint (passenger's seat side) are prepared as a navigation image and a television image, respectively, and the navigation image and the television image are presented to the corresponding observers (driver and passenger) using the image separating unit. In the case of the stereoscopic display device, the arrangement relationship between the panel pixel and the apertures of the parallax barrier is determined on the basis of the position of the right and left eyes. In the case of the multi-viewpoint display device, the arrangement relationship between the panel pixel and the apertures of the parallax barrier is determined on the basis of the position of the observers.

In the present embodiment, the liquid crystal panel is used as the display unit 3. Instead of the liquid crystal panel, other display panels may be used as the display unit. As display panels, a non-emission-type panel such as a liquid crystal panel or an electrophoresis panel and a self-emission-type panel such as an electroluminescence (EL) panel are usable. Moreover, the parallax barrier B is used as the image separating unit. Instead of the parallax barrier, lenticular lenses may be used as the image separating unit.

### Electronic Apparatus

Fig. 7 is a perspective view showing an example of the electronic apparatus of the invention. The cellular phone 1300 includes a plurality of operation buttons 1302, an earpiece 1303, a mouthpiece 1304, and a display unit 1301 to which the display device of the invention is applied. As electronic apparatuses to which the display device of the above embodiments is applied, there are an electronic book, a personal computer, a digital still camera, a liquid crystal TV, a view-finder-type (or monitor-direct-view-type) video tape recorder, a car navigation device, a pager, an electronic organizer, a calculator, a word processor, a workstation, a video phone, a POS terminal, an apparatus equipped with a touch panel, other than the cellular phone. Accordingly, it is possible to provide an electronic apparatus capable of displaying an image having a clear and smooth border.

Although the exemplary embodiments of the invention have been described with reference to the accompanying drawings, it should be understood that the invention is not limited to such embodiments. Various shapes or combinations of respective constituent elements illustrated in the above-described embodiments are merely examples, and various changes may be made depending on design requirements or the like without departing from the spirit or scope of the invention.

## Claims

1. A display device, comprising:
pixels including a plurality of subpixels of different colors;
a display unit in which the pixels are arranged in horizontal and vertical directions;
an image data combining circuit that combines image data for a plurality of images to be displayed on the display unit with each other; and
an image separation member that spatially separates the plurality of images displayed on the display unit from each other,
wherein the plurality of images are displayed over a plurality of rows on a row-by-row basis, and
wherein the plurality of images are alternately displayed in the horizontal and vertical directions on a subpixel-by-subpixel basis.

2. The display device according to Claim 1, wherein an aspect ratio of a display pixel which is a minimum display unit of the images displayed over the plurality of rows is 1:1.

3. The display device according to Claim 1 or Claim 2, wherein the image data combining circuit is configured to separate the image data for the plurality of images into image data corresponding to a plurality of rows arranged in the vertical direction on one screen and to filter out the image data corresponding to the plurality of rows on a row-by-row basis, thereby compressing the image data for the plurality of images.

4. The display device according to Claim 3, wherein the image data combining circuit includes:
a read-in control circuit that selectively reads, into a memory, the image data corresponding to the plurality of rows to be displayed on the display unit from pre-combined image data for the plurality of images supplied from an external source; and
a read-out control circuit that reads out the image data read into the memory on a row-by-row basis and outputs the image data for the plurality of images to the display unit on a row-by-row basis.

5. The display device according to any one of preceding Claims 1-4, wherein the plurality of images include an image for the left eye and an image for the right eye.

6. The display device according to any one of preceding Claims 1-5, wherein the plurality of images include a first-viewpoint image observed from a first viewpoint and a second-viewpoint image observed from a second viewpoint.

7. An image processing method in which a plurality of images are combined with each other and displayed on one screen, the method comprising:
displaying the plurality of images over a plurality of rows on a row-by-row basis; and
displaying the plurality of images in an alternating manner in horizontal and vertical direction on a subpixel-by-subpixel basis.

8. An electronic apparatus comprising the display device according to any one of preceding Claims 1-6.
